(19) Europäisches Patentamt / European Patent Office / Office européen des brevets

(11) **EP 4 183 516 B1**

(12) **EUROPEAN PATENT SPECIFICATION**

(45) Date of publication and mention
of the grant of the patent:
**28.01.2026 Bulletin 2026/05**

(51) International Patent Classification (IPC):
**B23K 26/38** (2014.01)    **B23K 26/0622** (2014.01)
**H01M 4/139** (2010.01)    **H01M 4/64** (2006.01)
**H01M 4/66** (2006.01)    **B23K 26/082** (2014.01)

(21) Application number: **21846929.4**

(52) Cooperative Patent Classification (CPC):
**B23K 26/38; B23K 26/0622; B23K 26/082;**
Y02E 60/10

(22) Date of filing: **20.07.2021**

(86) International application number:
**PCT/JP2021/027216**

(87) International publication number:
**WO 2022/019311 (27.01.2022 Gazette 2022/04)**

(54) **LASER CUTTING METHOD FOR METAL FOIL**

LASERSCHNEIDVERFAHREN FÜR METALLFOLIE

MÉTHODE DE DÉCOUPE LASER POUR FEUILLES MÉTALLIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.07.2020 JP 2020123947**

(43) Date of publication of application:
**24.05.2023 Bulletin 2023/21**

(73) Proprietor: **FURUKAWA ELECTRIC CO., LTD.
Chiyoda-ku
Tokyo 100-8322 (JP)**

(72) Inventors:
• **MATSUNAGA, Keigo
Tokyo 100-8322 (JP)**
• **MURAYAMA, Taro
Tokyo 100-8322 (JP)**
• **SAKAI, Toshiaki
Tokyo 100-8322 (JP)**
• **KAYAHARA, Takashi
Tokyo 100-8322 (JP)**
• **SHIGEMATSU, Takashi
Tokyo 100-8322 (JP)**

(74) Representative: **SSM Sandmair
Patentanwälte Rechtsanwalt
Partnerschaft mbB
Joseph-Wild-Straße 20
81829 München (DE)**

(56) References cited:
WO-A1-2016/208686    JP-A- 2005 511 314
JP-A- 2013 094 838    JP-A- 2017 084 691
US-A1- 2003 183 603    US-A1- 2009 296 748

**Description**

Field

The present invention relates to a method for cutting metal foil with laser, see claim 1.

Background

Laser cutting by application of a laser beam is known as one of methods to cut processing targets made of metal materials. Laser cutting is a method of cutting a processing target by applying a laser beam onto the part of the processing target and melting the part with the energy of the laser beam (see, for example, Non Patent Literature 1).
Document WO 2016/208686 A1 (describing the preamble of claim 1) shows a cutting apparatus that cuts a workpiece by laser light.
Document US 2009/296748 A1 discloses a diode pumped laser having a CW level and adapted to output one or more pulses having peak power greater than the CW level thereby to provide higher peak power for use in material piercing or penetrating operations without affecting diode lifetime.

Citation List

Non Patent Literature

[Non Patent Literature 1] Patwa, Rahul, et al. "High speed laser cutting of electrodes for advanced batteries." International Congress on Applications of Lasers & Electro Optics. 2010.

Summary

Technical Problem

When the processing target is a metal foil, because the metal foil is easily deformed or torn, it may be difficult to obtain the required quality, in the case where various parameters for laser cutting are set in the same manner as for thicker metal members.
In cases where metal foils are applied to battery electrodes, for example, higher quality laser cutting with less dross and spatter is required.
Therefore, an object of the present invention is, for example, to obtain a new and further improved method for cutting metal foil with laser that is capable of cutting metal foil serving as a processing target by laser. Solution to Problem
A method for cutting metal foil with laser according to the present invention is defined in claim 1, and includes: cutting a processing target by laser by intermittently applying a pulse of laser beam to a surface of a metal foil serving as the processing target at a frequency of 1 [MHz] or less, for example.
According to the present invention, when the frequency is A [Hz] and a full width at half maximum of the pulse is B [s], a duty ratio Rd [%] expressed by following equation $Rd = A \times B \times 100 ... (1)$ is 0.1 or more and 80 or less.
The duty ratio Rd [%] may be 0.2 or more and 40 or less.
According to the present invention, a pulse ratio Rp expressed by following equation $Rp = F/B ... (2)$ is 1 or more and 7 or less when the full width at half maximum is B and a $1/e^2$ width of the pulse is F [s], an M2 beam quality of the laser beam is 1.2 or less, and energy applied by the pulse is 0.1 [mJ] or more.
The laser beam may be swept relative to the surface, and, when a sweep rate of the laser beam is C [m/s], a spot diameter of the laser beam on the surface is D [m], and an output of the laser beam is E [W], an index I expressed by following equation $I = A \times B \times C \times D \times E ... (3)$ may be $1.0 \times 10^{-7}$ or more and $1.0 \times 10^{-1}$ or less.
A thickness of the processing target may be 500 [$\mu$m] or less.
In the laser cutting method for metal foil, the metal foil may include a coated region that is covered with a film and an exposed region that is not covered with the film, and the coated region and the exposed region may be continuously cut by laser by sweeping the laser beam.
A spot diameter of the laser beam on the surface may be 100 [$\mu$m] or less.
The spot diameter may be 50 [$\mu$m] or less.
According to the present invention, the pulse has a first peak and a second peak after the first peak, the second peak having a lower output than the first peak, and an output ratio Ro (= Pp2/Pp1) serving as a ratio of an output Pp2 of the second peak to an output Pp1 of the first peak may be 0.1 or more and 0.5 or less. A time interval between the first peak and the second peak is 5.0 [$\mu$sec] or less.
The processing target may be cut by laser by performing a plurality of sweeps of the laser beam against the surface.

Each sweep in the sweeps of the laser beam may be performed under a condition where cutting of the processing target is impossible in a single sweep.

The processing target having a thickness of 100 [$\mu$m] or more may be cut by laser by performing two sweeps of the laser beam under a condition where the index I expressed by the following equation: $I = A \times B \times C \times D \times E \ldots$ (3) is $1.0 \times 10^{-5}$ or more and $1.0 \times 10^{-2}$ or less, when a sweep rate of the laser beam is C [m/s], a spot diameter of the laser beam on the surface is D [m], and an output of the laser beam is E[W].

The method may include further a step of removing coating material on the surface by laser beam application prior to a step of cutting the processing target by laser.

The laser beam may be swept along a same path on the surface in the step of removing the coating material on the surface and the step of cutting the processing target by laser. Advantageous Effects of Invention

According to the present invention, a new and further improved method for cutting metal foil with laser can be obtained, which enables laser cutting of metal foil as a processing target.

Brief Description of Drawings

FIG. 1 is an exemplary schematic diagram of a laser cutting device.

FIG. 2 is an exemplary schematic diagram of a laser device included in the laser cutting device according to the first embodiment.

FIG. 3 is a timing chart illustrating the change over time of output of a laser beam applied from the laser cutting device.

FIG. 4 is an enlarged view of one pulse of the laser beam in FIG. 3.

FIG. 5 is a photographed image in a plan view of an example of a cut edge and its vicinity of a metal foil of 100 [$\mu$m] thickness as a processing target cut with the laser cutting device.

FIG. 6 is a photographed image in a side view of the cut edge of the metal foil in FIG. 5.

FIG. 7 is a photographed image in a plan view of an example of the cut edge and its vicinity when the same metal foil as in FIGS. 5 and 6 is cut by laser under different conditions from those in FIGS. 5 and 6 as a reference example.

FIG. 8 is a photographed image in a side view of the cut edge of the metal foil in FIG. 7.

FIG. 9 is a photographed image in a plan view of an example of the cut edge and its vicinity of metal foil of 10 [$\mu$m] thickness as a processing target cut with the laser cutting device.

FIG. 10 is a photographed image in a side view of the cut edge of the metal foil in FIG. 9.

FIG. 11 is a photographed image in a plan view of an example of the cut edge and its vicinity when the same metal foil as in FIGS. 9 and 10 is cut by laser under different conditions from those in FIGS. 9 and 10 as a reference example.

FIG. 12 is a photographed image in a side view of the cut edge of the metal foil in FIG. 11.

FIG. 13 illustrates experimental results of laser cutting according to duty ratio and index for a plurality of samples of metal foil.

FIG. 14 is an exemplary schematic diagram of another laser cutting device.

Description of Embodiments

Exemplary embodiments of the present invention will be disclosed below. Configurations of the embodiments illustrated below, as well as the actions and results (effects) provided by the configuration, are examples. The present invention can also be achieved by configurations other than those disclosed in the following embodiments. In addition, according to the present invention, it is possible to obtain at least one of various effects (including derivative effects) obtained by the configuration.

The embodiments illustrated below have similar configurations. Therefore, according to the configurations of the embodiments, similar actions and effects based on the similar configurations can be obtained. In the following description, those similar configurations will be provided with similar symbols, and overlapping explanations may be omitted.

In each of the drawings, an X direction is represented by an arrow X, a Y direction by an arrow Y, and a Z direction by an arrow Z. The x-, y-, and z-directions intersect and are orthogonal to each other. The Z direction is the normal direction of a surface Wa (machined surface) of a processing target W. Although the X direction is illustrated as a sweep direction SD in some drawings, the sweep direction SD is not limited to the X direction, as long as it intersects the Z direction.

[First Configuration]

[Configuration of laser cutting device].

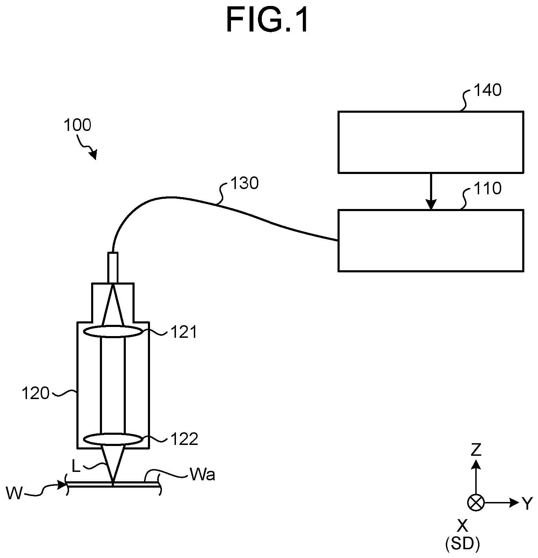

FIG. 1 is a schematic diagram of a laser cutting device 100. The laser cutting device 100 includes a laser device 110, an optical head 120, an optical fiber 130 connecting the laser device 110 and the optical head 120, and a controller 140.

A processing target W of the laser cutting device 100 is made of, for example, a conductive metal material. The metal material is, for example, a copper-based material, such as copper and a copper alloy, and/or an aluminum-based material, such as aluminum and an aluminum alloy. In such cases, the processing target W can also be referred to as a metal conductor.

The processing target W is, for example, a metal foil 10 with a thickness of 500 [$\mu$m] or less, but is not limited thereto.

The metal foil 10 may also be an electrode, for example, of a battery, such as a lithium-ion battery. In this case, the metal foil 10 may be coated with an active material, such as manganese dioxide or lithium. The laser cutting device 100 may continuously cut both a part coated with the active material and a part not coated with the active material in a single sweep. The active material can also be referred to as a film, a coating film, a coating material, a surface layer, or a surface layer material. The metal foil 10 as the processing target W of the laser cutting device 100 is not limited to an electrode of a battery. For example, the metal foil 10 may be coated with a different material other than the active material, it may have a surface layer, such as a plating layer, it may have a film or a surface layer formed over the entire surface. It may have parts where a film or a surface layer is formed and parts where no film or surface layer is formed, or it may have no film or surface layer.

The laser device 110 includes a laser oscillator and is configured to output a single-mode laser beam of several kW power, as an example. The laser device 110 will be described below.

The optical fiber 130 guides the laser beam output from the laser device 110 to the optical head 120. When the laser device 110 outputs a single-mode laser beam, the optical fiber 130 is configured to propagate the single-mode laser beam. In this case, the M2 beam quality of the single-mode laser beam is set to 1.2 or less. When the laser device 110 outputs a multi-mode laser beam, the optical fiber 130 is configured to propagate the multimode laser beam.

The optical head 120 is an optical device for applying the laser beam input from the laser device 110 to the processing target W. The optical head 120 includes a collimating lens 121 and a condensing lens 122. The collimating lens 121 and the condensing lens 122 can also be referred to as optical components. The optical head 120 may include optical components other than the collimating lens 121 and the condensing lens 122.

The optical head 120 is configured to be able to change its position relative to the processing target W to sweep the laser beam L while applying the laser beam L on the processing target W. Relative movement of the optical head 120 and the processing target W can be achieved by movement of the optical head 120, movement of the processing target W, or movement of both the optical head 120 and the processing target W.

The collimating lens 121 collimates the input laser beam. The collimated laser beam becomes a collimated light. The condensing lens 122 converges the laser beam as a collimated light, and applies it as a laser beam L (output light) onto the processing target W.

With this configuration, the optical head 120 applies the laser beam L to the surface Wa of the processing target W in the opposite direction of the Z direction. The application direction of the laser beam L from the optical head 120 is the opposite direction of the Z direction. The optical head 120 can, for example, converge the laser beam L such that, for example, the beam diameter is 10 [$\mu$m] or more.

The controller 140 controls operations of the laser device 110 and operations of the optical head 120 or a drive mechanism of a stage supporting the processing target W.

[Laser device]

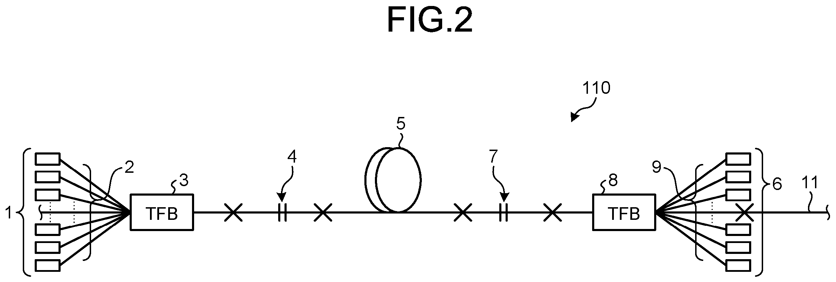

FIG. 2 is a schematic diagram of an example of the laser device 110. The laser device 110 can also be referred to as a light source device. The laser device 110 in FIG. 2 is a CW laser capable of outputting a laser beam continuously. The laser device 110 can also be referred to as a laser oscillator.

The laser device 110 illustrated in FIG. 2 is an optical fiber laser, and includes a plurality of semiconductor pumping light sources 1, a plurality of optical fibers 2, an optical multiplexer 3, an optical fiber Bragg grating (FBG) 4, an optical amplifying fiber 5, an FBG 7, an optical multiplexer 8, a plurality of optical fibers 9, a plurality of semiconductor pumping light sources 6, and an output optical fiber 11. The elements are connected by optical fibers as appropriate. The output optical fiber 11 is optically coupled to the optical fiber 130 illustrated in FIG. 1 or is part (input end) of the optical fiber 130.

Each of the semiconductor pumping light sources 1 serving as pumping light sources outputs pumping light to be supplied to the optical amplifying fiber 5. The pumping light has a wavelength that can optically excite the optical amplifying fiber 5, for example, 915 [nm]. Each of the optical fibers 2 propagates the pumping light output from each semiconductor pumping light source 1 and outputs the pumping light to the optical multiplexer 3.

The optical multiplexer 3 is formed of a tapered fiber bundle (TFB). The optical multiplexer 3 multiplexes the pumping light input from each optical fiber 2 into the optical fiber of the signal light port and outputs the multiplexed pumping light to the optical amplifying fiber 5.

The optical amplifying fiber 5 is an ytterbium doped fiber (YDF) in which ytterbium (Yb) ions serving as an amplifying substance are added to a core part made of quartz glass, and is a double clad optical fiber in which an inner cladding layer made of quartz glass and an outer cladding layer made of resin or the like are formed sequentially around the periphery of the core part. The core part of the optical amplifying fiber 5 has a NA of, for example, 0.08 and is configured to propagate light emitted by Yb ions, for example, at a wavelength of 1070 [nm], in a single mode. The absorption coefficient of the core part of the optical amplifying fiber 5 is 200 [dB/m] at a wavelength of 915 [nm], for example. The power conversion efficiency from the pumping light input to the core part to the laser oscillation light is, for example, 70%.

The FBG 4 serving as the rear-end reflection unit is connected between the optical fiber of the signal light port of the optical multiplexer 3 and the optical amplifying fiber 5. The FBG 4 has a center wavelength of, for example, 1070 [nm], and has a reflectivity of approximately 100% in the wavelength bandwidth of the center wavelength and a width of approximately 2 [nm] around it, so that light with a wavelength of 915 [nm] is mostly transmitted. The FBG 7 serving as the output-side reflection unit is connected between the optical fiber of the signal optical port of the optical multiplexer 8 and the optical amplifying fiber 5. The FBG 7 has a center wavelength of, for example, 1070 [nm], which is substantially the same as that of the FBG 4, a reflectivity of approximately 10% to 30% at the center wavelength, a full width at half maximum in the reflected wavelength bandwidth of approximately 1 [nm], so that almost all light with a wavelength of 915 [nm] is transmitted.

The FBGs 4 and 7 are placed against the respective ends of the optical amplifying fiber 5, and form an optical fiber resonator for light with a wavelength of 1070 [nm].

Each of the semiconductor pumping light sources 6 serving as pumping light sources outputs pumping light to be supplied to the optical amplifying fiber 5. The pumping light has a wavelength that can optically excite the optical amplifying fiber 5, for example, a wavelength of 915 [nm]. The optical fibers 9 propagate the pumping light output from the respective semiconductor pumping light sources 6 and output the light to the optical multiplexer 8.

The optical multiplexer 8 is formed of a TFB, like the optical multiplexer 3. The optical multiplexer 8 multiplexes the pumping light input from each of the optical fibers 9 into the optical fiber of the signal light port and outputs the multiplexed pumping light to the optical amplifying fiber 5.

In the optical amplifying fiber 5, Yb ions in the core part are optically excited by the pumping light and emit light in the bandwidth including the wavelength of 1070 [nm]. The light emitted at a wavelength of 1070 [nm] is laser-oscillated by optical amplification action of the optical amplifying fiber 5 and action of the optical resonator formed of the FBGs 4 and 7.

The output optical fiber 11 is located on the opposite side of the FBG 7 and is connected to the optical fiber of the signal light port of the optical multiplexer 8. The oscillated laser beam (laser oscillated light) is output from the output optical fiber 11. The laser device 110 operates as a pulsed laser outputting pulses of laser beam under the control of the controller 140 as described below. However, the laser device 110 may be a pulsed laser generating pulses using other methods or a laser device using an optical amplification method and different from an optical fiber laser.

[Laser cutting method]

In laser cutting using the laser cutting device 100, the processing target W is first set so that the laser beam L is applied. Then, the laser beam L and the processing target W move relative to each other while the laser beam L is applied to the processing target W. This causes the laser beam L to move (sweep) in the sweep direction SD on the surface Wa while being applied onto the surface Wa. The part irradiated with the laser beam L melts and is cut.

[Intermittent application]

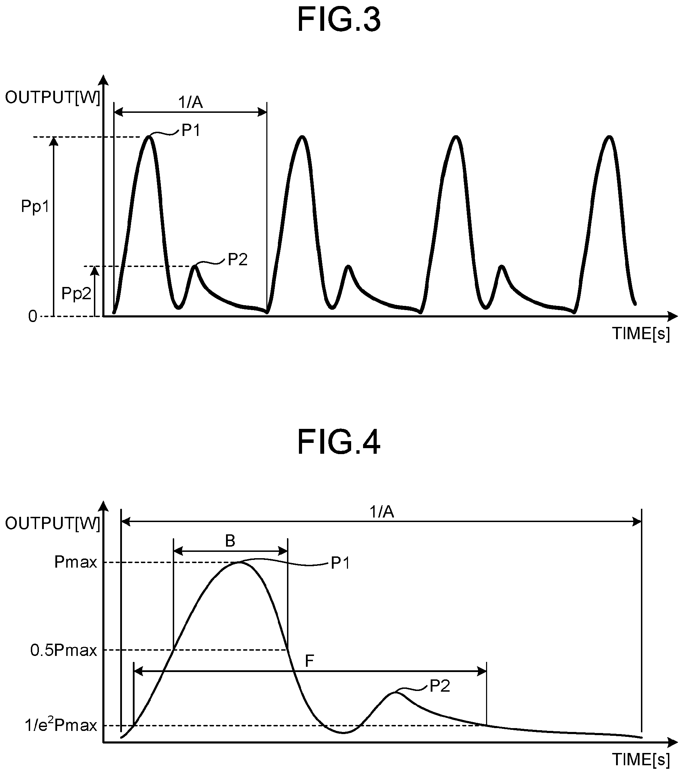

FIG. 3 is a timing chart illustrating the change over time of the power of the laser beam L. FIG. 4 is an enlarged view of a portion (one pulse) of FIG. 3.

In laser cutting, if a strong laser beam L strikes the metal foil 10, the cut edges may bend or flip. However, if the output of the laser beam L is reduced, laser cutting takes more time. Therefore, after diligent research, the inventors have found that when the processing target W is a metal foil 10, better results can be obtained in a shorter processing time by intermittently (intermittently) applying the laser beam L at a predetermined frequency to the surface Wa, as illustrated in FIGS. 3 and 4.

Through experimental studies, the inventors have found that the frequency of the pulse of the laser beam L (1/A, A: pulse period [s], see FIGS. 3 and 4) is suitably to be 6 [KHz] or more and 1 [MHz] or less.

Through experimental studies, the inventors have also found a suitable range for the duty ratio Rd of pulses of the laser beam L. Here, the controller 140 controls the laser device 110 to switch between on and off, i.e., an output state (operating state) and a stop state (non-output state, non-operating state), at a high frequency as described above. Specifically, for example, the controller 140 outputs a control signal such that power in a rectangular waveform in time is supplied to the semiconductor pumping light sources 1 and 6. In this case, the variation over time of the output of the laser beam L by the laser device 110 does not have a perfect rectangular waveform, but has a dull waveform, as illustrated in FIGS. 3 and 4, as an example. Therefore, the inventors have defined the duty ratio Rd [%] of the pulses of the laser beam L output from the laser device 110 as in the following equation (1).

$$Rd = A \times B \times 100 \tag{1}$$

Here, B [s] (see FIG. 4) is the full width at half maximum of the pulse, which is the width (time width) of the value that is half value (0.5 Pmax) of the maximum value Pmax [W] of the pulse, and if there are a plurality of times with 0.5 Pmax within one pulse, it is the time width between the two farthest times. The inventors' experimental studies have revealed that according to the present invention, a duty ratio Rd [%] of 0.1 to 80 is suitable, and a duty ratio of 0.2 to 40 is even more suitable.

Through experimental studies, the inventors have also found a suitable range for the waveform of the pulses. Here, the inventors have defined the pulse ratio Rp as in the following equation (2).

$$Rp = F/B \tag{2}$$

Here, F is a $1/e^2$ width of the pulse and B is the full width at half maximum of the pulse. The $1/e^2$ width of a pulse is defined as the width of the pulse being $1/e^2$ ($\approx 0.135$) relative to the maximum value Pmax of the pulse, and if there are a plurality of values that is $1/e^2$ within a pulse, it is the time width between the two farthest times. The pulse ratio Rp is an index indicating the spread of pulses, and a higher value indicates a wider pulse spread. The inventors' experimental studies have revealed that according to the present invention, a pulse ratio Rp of 1 to 7 is suitable. According to the present invention, the M2 beam quality of the laser beam L is suitably 1.2 or less and the energy applied by the pulse is suitably 0.1 [mJ] or more.

Furthermore, through experimental studies, the inventors have found a suitable range for the index I expressed in equation (3) below.

$$I = A \times B \times C \times D \times E \tag{3}$$

Here, C [m/s] is the sweep rate of the laser beam L, D [m] is the spot diameter of the laser beam L on the surface Wa of the processing target W, and E[W] is the output of the laser beam L. The spot diameter D (beam diameter) is defined as the diameter of an area of power that includes the peak of power at that spot and is $1/e^2$ or more of the peak power. In the case where the spot is not circular, the spot diameter can be defined as the length of the area in a direction perpendicular to the sweep direction SD where the power is $1/e^2$ or more of the peak power. The power distribution at the spot is not limited to a Gaussian shape. The inventors' experimental studies have revealed that an index I of $1.0 \times 10^{-7}$ or more and $1.0 \times 10^{-1}$ or less is suitable.

[Experimental results].

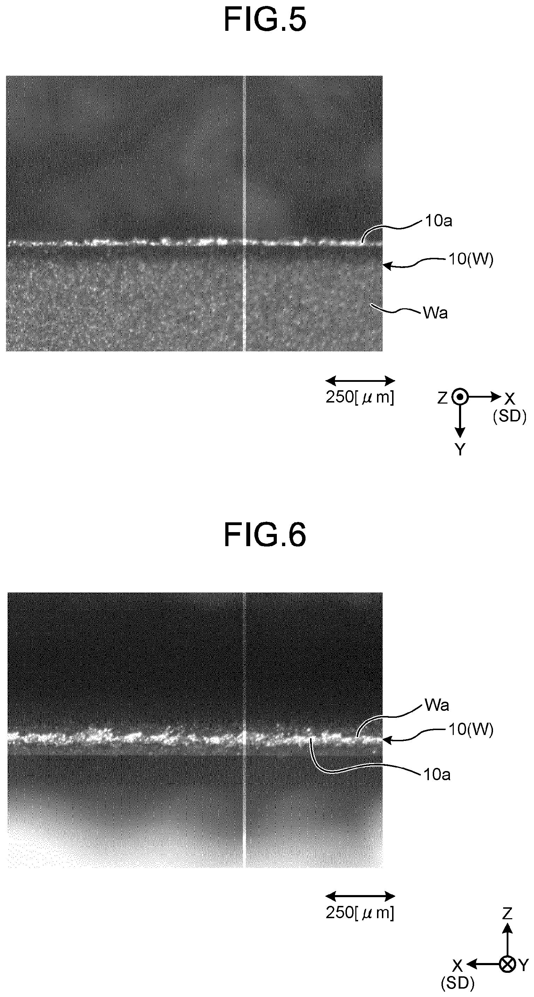

FIGS. 5 and 6 illustrate the experimental results in the case where the metal foil 10 serving as the processing target W is an aluminum foil of thickness 100 [μm] as an electrode with the surface coated with active material, the duty ratio Rd is 6.1, and the index I is $3.84 \times 10^{-3}$. FIG. 5 is a plan view of a cut edge 10a and its vicinity, and FIG. 6 is a side view of the cut edge 10a. As is clear from FIGS. 5 and 6, under these conditions, a good cut edge 10a (processed state) is obtained, with little or no bending, flipping, dross, spatter, etc.

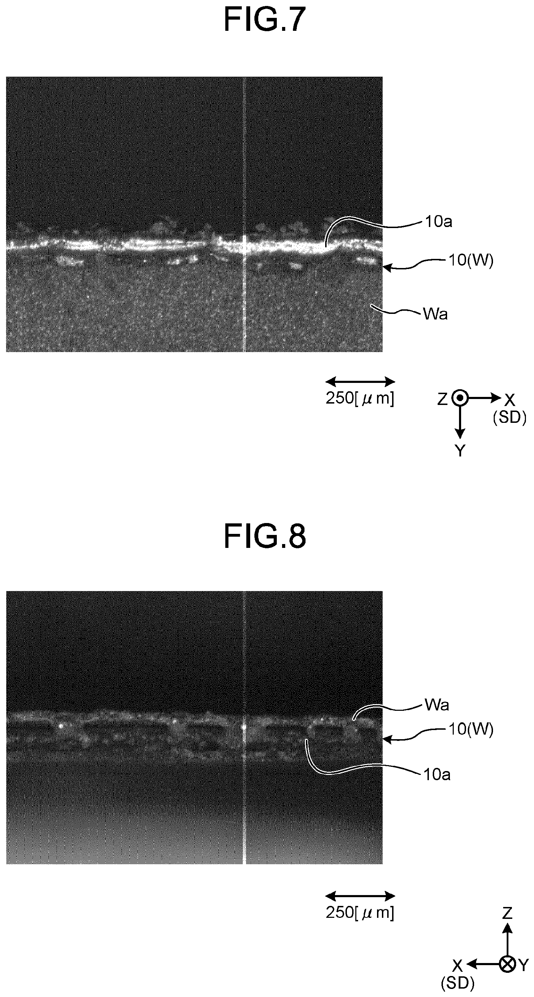

FIGS. 7 and 8 illustrate the experimental results as a reference example in the case where the application conditions of the laser beam L are changed for the same processing target W as in FIGS. 5 and 6. In FIGS. 7 and 8, the duty ratio Rd is 100 and the index I is $3.84 \times 10^{-3}$. A duty ratio Rd of 100 means that the laser beam L is continuously applied, not intermittent application of a pulsed laser beam L. FIG. 7 is a plan view of a cut edge 10a and its vicinity, and FIG. 8 is a side view of the cut edge 10a. As is clear by comparing FIGS. 7 and 8 with FIGS. 5 and 6, deformation of the cut edge 10a is greater under these conditions, with more flipping and bending.

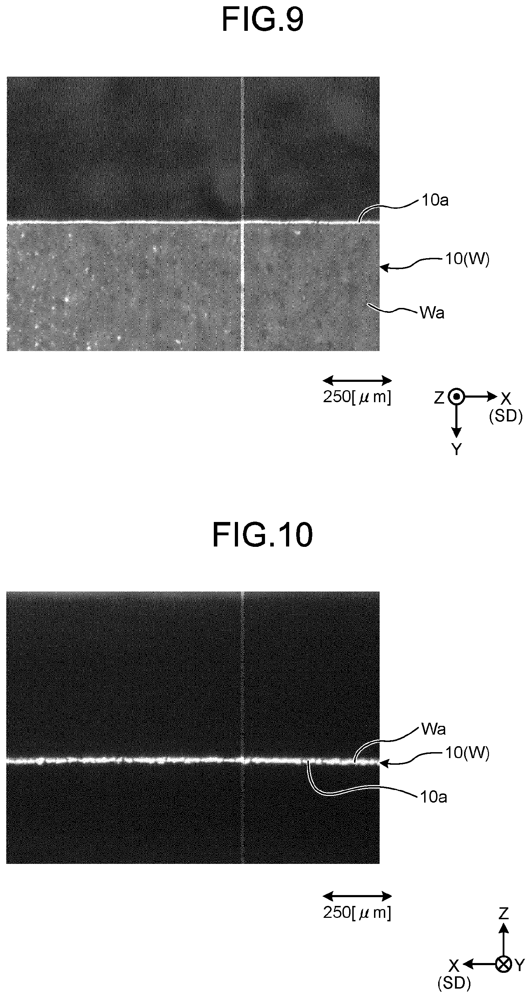

FIGS. 9 and 10 illustrate the experimental results in the case where the metal foil 10 serving as the processing target W is a copper foil of thickness 10 [um], the duty ratio Rd is 6.1, and the index I is $3.84 \times 10^{-3}$. FIG. 9 is a plan view of a cut edge 10a and its vicinity, and FIG. 10 is a side view of the cut edge 10a. As is clear from FIGS. 9 and 10, under these conditions, a good cut edge 10a (processed state) is obtained, with little or no bending, flipping, dross, spatter, etc.

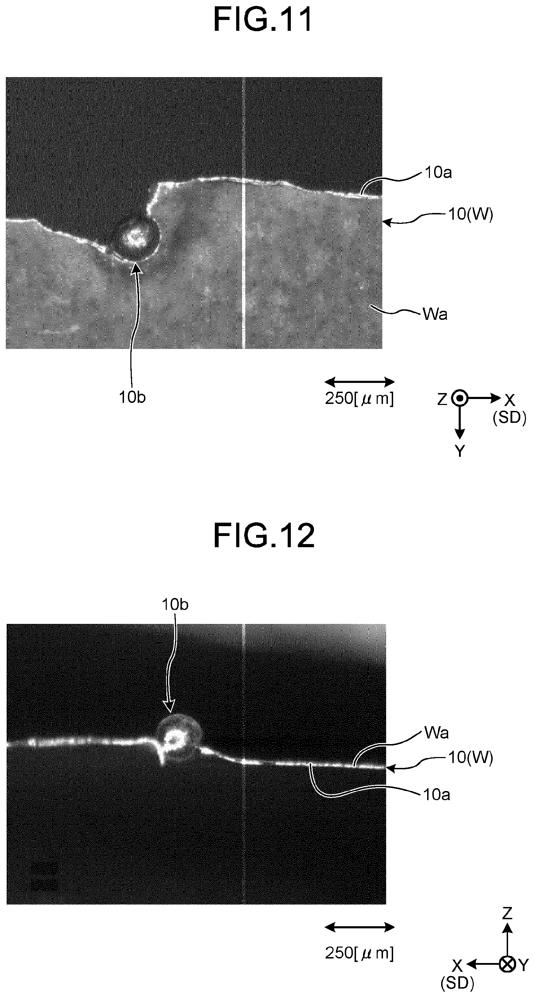

FIGS. 11 and 12 illustrate the experimental results as a reference example in the case where the application conditions of the laser beam L are changed for the same processing target W as in FIGS. 9 and 10. In FIGS. 11 and 12, the duty ratio Rd is 100 and the index I is $6.3 \times 10^{-2}$. Since the duty ratio Rd is 100, the laser beam L is continuously applied in this case as well. FIG. 11 is a plan view of a cut edge 10a and its vicinity, and FIG. 12 is a side view of the cut edge 10a. As is clear from FIGS. 11 and 12, under these conditions, dross 10b is generated and the cut edge 10a heavily flips or bents.

One metal foil 10, such as aluminum foil or copper foil, may have a coated region covered with a film, such as active material, and an exposed region that is not covered with the film. The inventors have confirmed through experimental studies that even in such a case, by properly setting the duty ratio Rd and index I according to specifications, such as the material and thickness of the metal foil 10 and the film, for example, a good processed state can be obtained in both the coated region and the exposed region, in continuous laser cutting of the coated and exposed regions by a single sweep of the laser beam L across the coated and exposed regions. Such a method makes it possible to perform laser cutting more quickly on the metal foil 10 including coated and exposed regions, thereby reducing the time required to manufacture components and products containing the metal foil 10.

In the manufacturing process of the metal foil 10, the sweep rate may change, for example, when the cutting processing is started with replacement of the product lot, when the cutting processing is finished to replace the product lot, or when other problems occur. Changes in sweep rate may adversely affect the processing quality. Through experimental studies, the inventors have confirmed that even when the sweep rate varies in continuous laser cutting, a good processed state can be obtained by appropriately setting or changing, for example, the duty ratio Rd and/or the index I according to the sweep rate. Such a method can suppress the decline in processing quality due to changes in sweep rate, making it easier to ensure the required processing quality and increasing the processing yield.

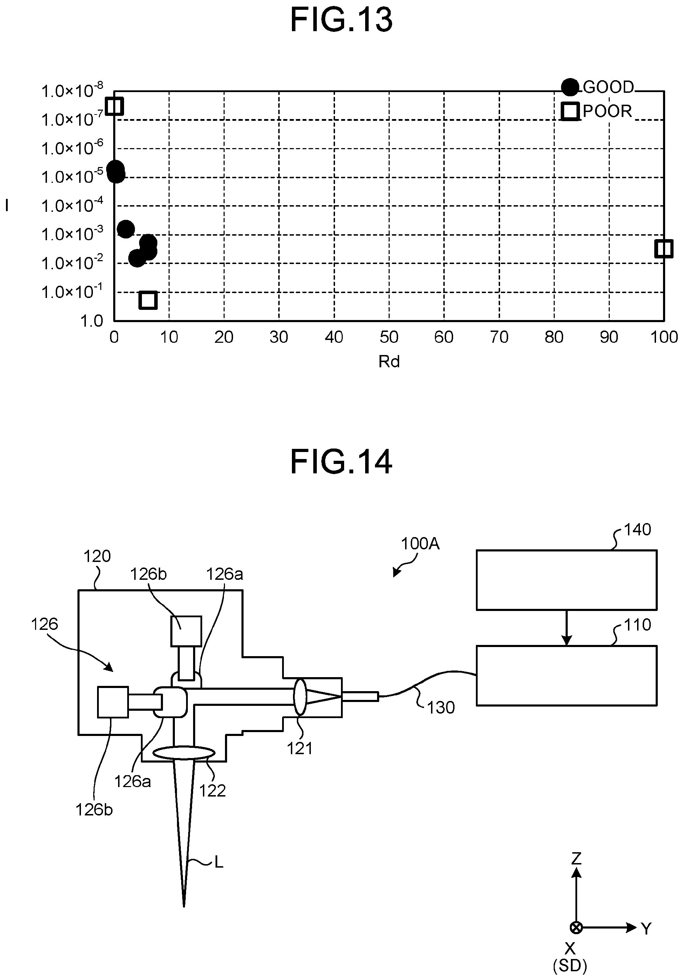

FIG. 13 is a graph illustrating some of the experimental results in the case where the horizontal axis is the duty ratio Rd and the vertical axis is the index I. From FIG. 13, it can be understood that suitable laser cutting can be performed when each of the duty ratio Rd and the index I is within a predetermined range.

The inventors' diligent research has also revealed that the spot diameter (beam diameter) D is preferably 100 [μm] or less, more preferably 50 [μm] or less, and even more preferably 30 [μm] or less. This is because, if the spot diameter D is too large, thermal energy is given to the outside of the cutting area (kerf), i.e., the processing target W, and quality defects, such as thermal oxidation, may occur.

According to the present invention, as illustrated in FIGS. 3 and 4, when the pulse has a first peak P1 and a second peak P2 after the first peak P1. Further according to the present invention, has been found that the ratio Ro (= Pp2/Pp1, hereinafter referred to as output ratio Ro) of the output Pp2 of the second peak P2 to the output Pp1 of the first peak P1 is 0.1 or more and 0.5 or less. For example, when a laser beam serving as an infrared light is applied to a material with relatively high reflectivity to the laser beam, such as a copper-based material and an aluminum-based material, it may be difficult to provide the energy necessary for cutting, depending on the pulse having only one peak. If the output of the second peak P2 is higher than the output of the first peak P1, the thermal effect on the surroundings of the cutting area may become too large. In this respect, when the output ratio Ro is set to 0.1 or more and 0.5 or less, as described above, even for materials with relatively high reflectivity to the laser beam, first, the material is melted with the first peak P1, and then the second peak P2, which has a lower output than the first peak P1, ensures the amount of energy necessary and appropriate for cutting. This allows for more reliable cutting and also suppresses thermal effects on the surroundings of the cutting area, resulting in a good cut edge 10a with little or no bending, flipping, dross, spatter, etc. Thus, according to the present invention, before the area melted with the first peak P1 solidifies, the area is irradiated with the second peak P2, which has a lower output than the first peak P1. According to the present invention, the time interval between the first peak P1 and the second peak P2 can be 5.0 [μsec] or less, for example.

It has been also found that a plurality of applications may be performed as in (1) or (2) below.

(1) The processing target W is cut by performing a plurality of sweeps on the same path under conditions where cutting of the processing target W is not completed in a single sweep. In the case where the surface of the processing target W is coated, for example, with brittle and easily breakable materials, such as ceramics and polymers, or active materials (hereinafter referred to as "coating materials"), the coating materials may be adversely affected, such as cracking or evaporation, if excessive energy is applied. In this respect, as described above, by performing the laser beam sweep a plurality of times under the condition where the cutting of the processing target W is not completed in a single sweep, it is possible to suppress adverse effects such as cracking or evaporation of the coating material caused by excessive energy input.

As for (1), when the thickness of the processing target W is 100 [μm] or more, it has been found that, by performing the sweep twice under the condition where the index I is $1.0 \times 10^{-5}$ or more and $1.0 \times 10^{-2}$ or less, it is possible to cut the processing target W while suppressing adverse effects on the coating material.

(2) First, the coating material is removed by laser beam application in the cutting area (area to be cut) and its vicinity, and then the processing target W is cut by performing the laser beam sweep of the present embodiment described above. In this case, laser cutting with higher energy efficiency and higher quality can be performed after eliminating the effects of the coating material. The laser beam may be swept along the same path in the process of removing the coating material and in the process of performing laser cutting. The laser beam applied in the process of removing the coating material may be pulsed or continuous wave.

As explained above, for example, the surface Wa of the metal foil 10 serving as the processing target W is intermittently irradiated with pulses of laser beam L at a frequency of 1 [MHz] or less to cut the processing target W by laser.

The duty ratio Rd [%] of the pulses of the laser beam L is 0.1 or more and 80 or less, or 0.2 or more and 40 or less.

The pulse ratio Rp is 1 or more and 7 or less, the M2 beam quality of the laser beam L may be 1.2 or less, and the energy applied by the pulse may be 0.1 [mJ] or more.

In the present embodiment, for example, the index I may be $1.0 \times 10^{-7}$ or more and $1.0 \times 10^{-1}$ or less.

Such a method of cutting metal foil by laser enables higher quality cutting to be performed with less energy and shorter required time.

[Second Configuration]

FIG. 14 is a schematic diagram of another laser cutting device 100A. Here, an optical head 120 includes a galvanc scanner 126 between the collimating lens 121 and the condensing lens 122. The galvano scanner 126 includes two mirrors 126a. The change in attitude of these two mirrors 126a changes the application direction and application position of the laser beam L. In other words, the laser cutting device 100A can move the application position of the laser beam L and sweep the laser beam L without moving the optical head 120. The controller 140 can control the operation of each of motors 126b corresponding to respective mirrors 126a such that the angle (attitude) of the mirror 126a changes. This also provides the same actions and effects as those of the first configuration described above.

The embodiments of the present invention illustrated above are examples and are not intended to limit the scope of the invention. The above embodiments can be implemented in various other forms, and various omissions, substitutions, combinations, and changes can be made without departing from the scope of the present invention as defined in the appended claims.

When the laser beam is swept against the processing target, the sweep may be performed by known wobbling, weaving, or output modulation to adjust the surface area of the molten pool.

The processing target can also be a metal surface with a thin layer of another metal, such as a plated metal sheet.

Industrial Applicability

The present invention can be used for laser cutting methods for metal foil.

Reference Signs List

1 SEMICONDUCTOR PUMPING LIGHT SOURCE
2 OPTICAL FIBER
3 OPTICAL MULTIPLEXER
4 FBG
5 OPTICAL AMPLIFYING FIBER
6 SEMICONDUCTOR PUMPING LIGHT SOURCE
7 FBG
8 OPTICAL MULTIPLEXER
9 OPTICAL FIBER
10 METAL FOIL
10a CUT EDGE
10b DROSS
11 OUTPUT OPTICAL FIBER
100, 100A LASER CUTTING DEVICE
110 LASER DEVICE (LASER OSCILLATOR)
120 OPTICAL HEAD
121 COLLIMATING LENS
122 CONDENSING LENS
126 GALVANO SCANNER
126a MIRROR

126b MOTOR
130 OPTICAL FIBER
140 CONTROLLER
A PULSE CYCLE
B FULL WIDTH AT HALF MAXIMUM
C SWEEP RATE
D SPOT DIAMETER
E OUTPUT
F $1/e^2$ WIDTH
I INDEX
L LASER BEAM
P1 FIRST PEAK
P2 SECOND PEAK
Pp1, Pp2 OUTPUT
Pmax MAXIMUM VALUE
SD SWEEP DIRECTION
Rd DUTY RATIO
Rp PULSE RATIO
W PROCESSING TARGET
Wa SURFACE
X DIRECTION
Y DIRECTION
Z DIRECTION (NORMAL DIRECTION)

## Claims

1. A method for cutting metal foil (10) by laser, the method comprising: cutting a processing target (W) by laser by intermittently applying a pulse of laser beam to a surface of a metal foil (10) serving as the processing target (w) at a frequency of 1 [MHz] or less,
wherein, when the frequency is A [Hz] and a full width at half maximum of the pulse is B [s], a duty ratio Rd [%] expressed by following equation $Rd = A \times B \times 100$ is 0.1 or more and 80 or less,
the method being **characterised in that**:
a pulse ratio Rp expressed by following equation $Rp = F/B$ is 1 or more and 7 or less when the full width at half maximum is B and a $1/e2$ width of the pulse is F [s], an M2 beam quality of the laser beam is 1.2 or less, energy applied by the pulse is 0.1 [mJ] or more,

   the pulse has a first peak (P1) and a second peak (P2) after the first peak (P1), the second peak (P2) having a lower output than the first peak (P2), and
   an output ratio Ro (= Pp2/Pp1) serving as a ratio of an output Pp2 of the second peak (P2) to an output Pp1 of the first peak (P1) is 0.1 or more and 0.5 or less,
   wherein a time interval between the first peak (P1) and the second peak (P2) is 5.0 [μsec] or less.

2. The method according to claim 1, wherein the duty ratio Rd [%] is 0.2 or more and 40 or less.

3. The method according to claim 1 or 2, wherein the laser beam is swept relative to the surface, and, when a sweep rate of the laser beam is C [m/s], a spot diameter of the laser beam on the surface is D [m], and an output of the laser beam is E [W], an index I expressed by following equation $I = A \times B \times C \times D \times E$ is $1.0 \times 10^{-7}$ or more and $1.0 \times 10^{-1}$ or less.

4. The method according to any one of claims 1 to 3, wherein a thickness of the processing target (W) is 500 [μm] or less.

5. The method according to any one of claims 1 to 4, wherein the metal foil (16) includes a coated region that is covered with a film and an exposed region that is not covered with the film, and the coated region and the exposed region are continuously cut by laser by sweeping the laser beam.

6. The method according to any one of claims 1 to 5, wherein a spot diameter of the laser beam on the surface is 100 [μm] or less.

7. The method according to claim 6, wherein the spot diameter is 50 [$\mu$m] or less.

8. The method according to any one of claims 1 to 7, wherein the processing target (W) is cut by laser by performing a plurality of sweeps of the laser beam against the surface.

9. The method according to claim 8, wherein each sweep in the sweeps of the laser beam is performed under a condition where cutting of the processing target (W) is impossible in a single sweep.

10. The method according to claim 9, wherein the processing target (W) having a thickness of 100 [$\mu$m] or more is cut by laser by performing two sweeps of the laser beam under a condition where the index I expressed by the following equation: $I = A \times B \times C \times D \times E$ is $1.0 \times 10^{-5}$ or more and $1.0 \times 10^{-2}$ or less, when a sweep rate of the laser beam is C [m/s], a spot diameter of the laser beam on the surface is D [m], and an output of the laser beam is E[W].

11. The method according to any one of claims 1 to 10, further comprising a step of removing coating material on the surface by laser beam application prior to a step of cutting the processing target (W) by laser.

12. The method according to claim 11, wherein the laser beam is swept along a same path on the surface in the step of removing the coating material on the surface and the step of cutting the processing target (W) by laser.

**Patentansprüche**

1. Ein Verfahren zum Schneiden von Metallfolie (10) mittels Laser, wobei das Verfahren umfasst: das Schneiden eines Bearbeitungsobjekts (W) mittels Laser durch intermittierendes Aufbringen eines Laserstrahlimpulses auf eine Oberfläche einer Metallfolie (10), die als Bearbeitungsobjekt (W) dient, mit einer Frequenz von 1 [MHz] oder weniger,

   wobei, wenn die Frequenz A [Hz] beträgt und die Halbwertsbreite des Impulses B [s] beträgt, ein Tastverhältnis Rd [%], ausgedrückt durch die folgende Gleichung $Rd = A \times B \times 100$, 0,1 oder mehr und 80 oder weniger beträgt, wobei das Verfahren **dadurch gekennzeichnet ist, dass**:

   ein Impulsverhältnis Rp, ausgedrückt durch die folgende Gleichung $Rp = F/B$, 1 oder mehr und 7 oder weniger beträgt, wenn die Halbwertsbreite B und eine 1/e2-Breite des Impulses F [s] beträgt, eine M2-Strahlqualität des Laserstrahls 1,2 oder weniger beträgt, die durch den Impuls zugeführte Energie 0,1 [mJ] oder mehr beträgt,
   der Impuls einen ersten Peak (P1) und einen zweiten Peak (P2) nach dem ersten Peak (P1) aufweist, wobei der zweite Peak (P2) eine geringere Leistung als der erste Peak (P2) hat, und
   ein Ausgabeverhältnis Ro (= Pp2/Pp1), das als Verhältnis einer Ausgabe Pp2 des zweiten Peaks (P2) zu einer Ausgabe Pp1 des ersten Peaks (P1) dient, 0,1 oder mehr und 0,5 oder weniger beträgt,
   wobei ein Zeitintervall zwischen dem ersten Peak (P1) und dem zweiten Peak (P2) 5,0 [$\mu$sec] oder weniger beträgt.

2. Das Verfahren nach Anspruch 1, wobei das Tastverhältnis Rd [%] 0,2 oder mehr und 40 oder weniger beträgt.

3. Das Verfahren nach Anspruch 1 oder 2, wobei der Laserstrahl relativ zur Oberfläche streicht und, wenn eine Streichrate des Laserstrahls C [m/s] beträgt, ein Spotdurchmesser des Laserstrahls auf der Oberfläche D [m] beträgt, und eine Leistung des Laserstrahls E [W] beträgt, ein durch die folgende Gleichung $I = A \times B \times C \times D \times E$ ausgedrückter Index I $1,0 \times 10^{-7}$ oder mehr und $1,0 \times 10^{-1}$ oder weniger beträgt.

4. Das Verfahren nach einem der Ansprüche 1 bis 3, wobei eine Dicke des Bearbeitungsobjekts (W) 500 [$\mu$m] oder weniger beträgt.

5. Das Verfahren nach einem der Ansprüche 1 bis 4, wobei die Metallfolie (16) einen beschichteten Bereich, der mit einer Folie bedeckt ist, und einen freiliegenden Bereich, der nicht mit der Folie bedeckt ist, umfasst, und der beschichtete Bereich und der freiliegende Bereich durch Abtasten des Laserstrahls kontinuierlich mit einem Laser geschnitten werden.

6. Das Verfahren nach einem der Ansprüche 1 bis 5, wobei ein Spotdurchmesser des Laserstrahls auf der Oberfläche 100 [$\mu$m] oder weniger beträgt.

**7.** Das Verfahren nach Anspruch 6, wobei der Spotdurchmesser 50 [μm] oder weniger beträgt.

**8.** Das Verfahren nach einem der Ansprüche 1 bis 7, wobei das Bearbeitungsobjekt (W) durch mehrere Abtastungen des Laserstrahls über die Oberfläche mit einem Laser geschnitten wird.

**9.** Das Verfahren nach Anspruch 8, wobei jede Abtastung des Laserstrahls unter einer Bedingung durchgeführt wird, bei der das Schneiden des Bearbeitungsobjekts (W) in einer einzigen Abtastung unmöglich ist.

**10.** Das Verfahren nach Anspruch 9, wobei das Bearbeitungsobjekt (W) mit einer Dicke von 100 [μm] oder mehr mit einem Laser geschnitten wird, indem zwei Durchläufe des Laserstrahls unter einer Bedingung durchgeführt werden, bei der der durch die folgende Gleichung ausgedrückte Index I: I = A × B × C × D × E 1,0 × 10⁻⁵ oder mehr und 1,0 × 10⁻² oder weniger ist, wenn eine Streichrate des Laserstrahls C [m/s] beträgt, ein Spotdurchmesser des Laserstrahls auf der Oberfläche D [m] beträgt und eine Leistung des Laserstrahls E [W] beträgt.

**11.** Das Verfahren nach einem der Ansprüche 1 bis 10, das ferner einen Schritt des Entfernens von Beschichtungsmaterial auf der Oberfläche durch Laserstrahlanwendung vor einem Schritt des Schneidens des Bearbeitungsobjekts (W) durch Laser umfasst.

**12.** Das Verfahren nach Anspruch 11, wobei der Laserstrahl im Schritt des Entfernens des Beschichtungsmaterials auf der Oberfläche und im Schritt des Schneidens des Bearbeitungsobjekts (W) mit dem Laser entlang derselben Bahn über die Oberfläche gestrichen wird.

**Revendications**

**1.** Procédé pour découper une feuille de métal (10) au laser, le procédé comprenant : la découpe d'une cible de traitement (W) au laser en appliquant de manière intermittente une impulsion de faisceau laser à une surface d'une feuille de métal (10) servant de cible de traitement (w) à une fréquence de 1 [MHz] ou moins,

dans lequel, lorsque la fréquence est A [Hz] et une largeur totale à mi-hauteur de l'impulsion est B [s], un rapport cyclique Rd [%] exprimé par l'équation suivante Rd = A x B x 100 est supérieur ou égal à 0,1 et inférieur ou égal à 80,
le procédé étant **caractérisé en ce que** :

un rapport d'impulsion Rp exprimé par l'équation suivante Rp = F / B est égal ou supérieur à 1 et inférieur ou égal à 7 lorsque la largeur totale à mi-hauteur est B et une largeur 1 / e2 de l'impulsion est F [s], une qualité de faisceau M2 du faisceau laser est égale ou inférieure à 1,2, une énergie appliquée par l'impulsion est égale ou supérieure à 0,1 [mJ],
l'impulsion présente un premier pic (P1) et un deuxième pic (P2) après le premier pic (P1), le deuxième pic (P2) présentant une sortie inférieure au premier pic (P2), et
un rapport de sortie Ro (= Pp2 / Pp1) servant de rapport entre une sortie Pp2 du deuxième pic (P2) et une sortie Pp1 du premier pic (P1) est supérieur ou égal à 0,1 et inférieur ou égal à 0,5, dans lequel un intervalle de temps entre le premier pic (P1) et le deuxième pic (P2) est inférieur ou égal à 5,0 [μs].

**2.** Procédé selon la revendication 1, dans lequel le rapport cyclique Rd [%] est supérieur ou égal à 0,2 et inférieur ou égal à 40.

**3.** Procédé selon la revendication 1 ou 2, dans lequel le faisceau laser est balayé par rapport à la surface, et, lorsqu'une vitesse de balayage du faisceau laser est C [m/s], un diamètre de faisceau du faisceau laser sur la surface est D [m], et une sortie du faisceau laser est E [W], un indice I exprimé par l'équation suivante I = A x B x C x D x E est supérieur ou égal à 1,0 x 10⁻⁷ et inférieur ou égal à 1,0 x 10⁻¹.

**4.** Procédé selon l'une quelconque des revendications 1 à 3, dans lequel une épaisseur de la cible de traitement (W) est inférieure ou égale à 500 [μm].

**5.** Procédé selon l'une quelconque des revendications 1 à 4, dans lequel la feuille de métal (16) inclut une région revêtue qui est recouverte d'un film et une région exposée qui n'est pas recouverte du film, et la région revêtue et la région exposée sont découpées en continu par laser par balayage du faisceau laser.

6. Procédé selon l'une quelconque des revendications 1 à 5, dans lequel un diamètre de faisceau du faisceau laser sur la surface est inférieur ou égal à 100 [μm].

7. Procédé selon la revendication 6, dans lequel le diamètre de faisceau est inférieur ou égal à 50 [μm].

8. Procédé selon l'une quelconque des revendications 1 à 7, dans lequel la cible de traitement (W) est découpée au laser par réalisation d'une pluralité de balayages du faisceau laser sur la surface.

9. Procédé selon la revendication 8, dans lequel chaque balayage parmi les balayages du faisceau laser est réalisé dans une condition telle que la découpe de la cible de traitement (W) est impossible en un seul balayage.

10. Procédé selon la revendication 9, dans lequel la cible de traitement (W) présentant une épaisseur supérieure ou égale à 100 [μm] est découpée au laser par réalisation de deux balayages du faisceau laser dans une condition telle que l'indice I exprimé par l'équation suivante : $I = A \times B \times C \times D \times E$ est supérieur ou égal à $1{,}0 \times 10^{-5}$ et inférieur ou égal à $1{,}0 \times 10^{-2}$, lorsqu'une vitesse de balayage du faisceau laser est C [m/s], un diamètre de faisceau du faisceau laser sur la surface est D [m], et une sortie du faisceau laser est E [W].

11. Procédé selon l'une quelconque des revendications 1 à 10, comprenant en outre une étape consistant à éliminer un matériau de revêtement sur la surface par application d'un faisceau laser avant une étape consistant à découper la cible de traitement (W) au laser.

12. Procédé selon la revendication 11, dans lequel le faisceau laser est balayé le long d'un même trajet sur la surface à l'étape consistant à éliminer le matériau de revêtement sur la surface et à l'étape consistant à découper la cible de traitement (W) au laser.

# FIG.1

EP 4 183 516 B1

# FIG.2

# FIG.3

# FIG.4

# FIG.5

10a

10(W)

Wa

250[μm]

Z ⊙ → X
    (SD)
↓
Y

# FIG.6

Wa

10(W)

10a

250[μm]

Z
↑
X ← ⊗ Y
(SD)

# FIG.7

# FIG.8

# FIG.9

250[μm]

Z ⊙ → X
(SD)
↓
Y

# FIG.10

250[μm]

Z
↑
X ← ⊗ Y
(SD)

# FIG.11

# FIG.12

# FIG.13

# FIG.14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016208686 A1

- US 2009296748 A1

**Non-patent literature cited in the description**

- **PATWA, RAHUL et al.** High speed laser cutting of electrodes for advanced batteries.. *International Congress on Applications of Lasers & Electro Optics.*, 2010